# EUROPEAN PATENT APPLICATION

(11) **EP 0 572 423 A1**
(43) Date of publication of application: **08.12.1993**
(21) Application number: 92902770.4
(22) Date of filing: 24.12.1991
(51) Int. Cl.: G06F 1/18

(54) **INSTANTANEOUS INFORMATION SYSTEM**

(71) Applicant: RANK XEROX ESPANOLA S.A., E-28027 Madrid (ES)
(72) Inventor: SABADELL BOSCH, Luis, E-28027 Madrid (ES)
(74) Representative: Elzaburu Marquez, Alberto
(86) International application number: ES9100092
(87) International publication number: WO9313471

(57) **Abstract**

Instantaneous information system comprising a tactile screen (4) wherein is presented a selection menu with graphic support and a simulated keyboard; a microcomputer which is not accessible from outside and which may include specific communication cards; a service keyboard (5) not accessible by the user; a printer which provides the documents requested and a furniture unit (1) which includes all the above mentioned elements. The instantaneous information system is particularly appropriate as conventional information point, self-service for printed matter and self-service for proceedings.

## Description

The present invention affords a basic novelty to the public information methods currently available for satisfying punctual needs of the user, eliminating the steps which lengthen the process and making immediate the written response to the formulated requisition.

Most of these methods are based on the basically personal activity of locating and handling the specific data in order to supply the requested information, it requiring a succession of steps which make the process complex and laborious. Normally, after a waiting time for attending to earlier requests, the customary process begins with a third party understanding the kind of information which is required, which sources of information may contain it, where they are stored and how access is gained to them. Then, he will have to extract the specific data, match it to that requested and give written form to the answer. All this involves a multitude of activities, equipment and staff whose coordination is in itself laborious, as well as slow and prone to errors.

The idea of matching the information processes to the needs of everyday life steered the research work which precedes this invention, identifying and side-stepping its weak points. As a result, an innovative system has been created which integrates at one point and time the multiple and dispersed processes which have to be followed today in order to complete a specific item of information. For this purpose, the present invention combines in a single apparatus all the functions needed to satisfy data enquiries by the public, incorporating new equipment for automatic processing which allow the user easy identification of the available information, help him to formulate his enquiry, exhibiting in graphical form on a touch-sensitive screen the method of finding the information sought, channel access to the databases which contain it, extract the information, and finally, deliver it written to the user. The process can be completed in a matter of seconds, with better accessibility, quality of response and prevention of fruitless idle waiting times.

The technical innovation of the invention lies not only in the way in which the equipment for automatic processing already in use is grouped together, but in its combining into a new intelligent system which structures its application to a specified end, making handling thereof simple for any type of user. Its versatility of use makes it easily adaptable to any surroundings in which there is a requirement for immediate information and/or its fast distribution between various users, via its connection to networks. The innovative characteristics of this invention make it especially prone to industrial exploitation, thus manifesting its inherent advantages on a large scale.

Technically, the invention consists in an intelligent computerized system controlled by a microprocessor, connected to a central or distributed database, which via an interface embodied in a touch-sensitive screen, selects the information to be obtained which may be printed, if desired, using a laser printer with 1,935 dot resolution per cm², which can incorporate the digitization of signatures, logos or any other type of graphical image, which furnish the final document with a high quality finish. The assembly described is arranged as a unit in a cabinet designed for the purpose of rationally integrating the equipment and elements of the system.

To be specific, the most relevant aspects of the instantaneous information system which is the subject of the present invention are embodied in laser-quality black and white printing on DINA4 paper with 300 × 300 dot resolution and a cabinet specially designed for easy use and which is attractive for the user.

In short, the advantages which are obtained with the instantaneous information system which is the subject of the present patent application can be summarized in the following points:
Ease of use (no computer experience).
Operation 24 hours a day.
Enables the user's need to be accommodated in a high percentage, without the need for human intervention on the part of the enterprise.
Ease of updating of the information held and of the functions, given that this can be carried out by diskette, remote loading or radio.
Low maintenance.
Zero training cost.
Possibility of improving the quality of the work of the staff who previously carried out this function.
Competitive advantages of image and service to the public/customers/employees.

Thus, the subject of the present invention is an instantaneous information system characterized in that it includes a touch-sensitive screen acting as user-interactive element, on which is displayed a selection menu with graphical support and which possesses a simulated keyboard through which alphanumeric data are entered; a microcomputer which is inaccessible from outside and which endows the system with intelligence, with the possibility of including specific communications cards; a service keyboard which is inaccessible to the user; a laser type printer which provides the documentation via an exit slot; and a cabinet which encloses all the above elements and which includes, moreover, in its upper part, two fans which create a forced ventilation, there being provided a distribution panel with a general differential, a magnetothermal device both for the equipment and for the fans, a contactor relay with latching circuit and thermostat and five electrical connection sockets.

In accordance with the invention, the instantaneous information system is isolated, that is to say, it is not connected to any other equipment, providing information in the form of a printed document already stored therein.

According to a second variant, the instantaneous information system which is the subject of this invention constitutes an element of a local (customer-server) network of other systems, one of them holding the database for all the elements of the network.

Finally, according to a third variant of the instantaneous information system which is the subject of the invention, the latter is of remote type, that is to say, it is connected to a central computer by way of remote processing, simulating a conventional terminal which will carry out the transactions therewith in order to obtain and/or check and/or modify the desired information.

Below will be described a preferred embodiment of the instantaneous information system which is the subject of the invention, referring to the accompanying drawings; it should be understood, however, that these figures in no way limit the scope thereof. They depict:
- Figure 1, a view of the instantaneous information system which is the subject of the invention; and
- Figure 2, an ordered breakdown view of the paper output tray of the system which is the subject of the invention.

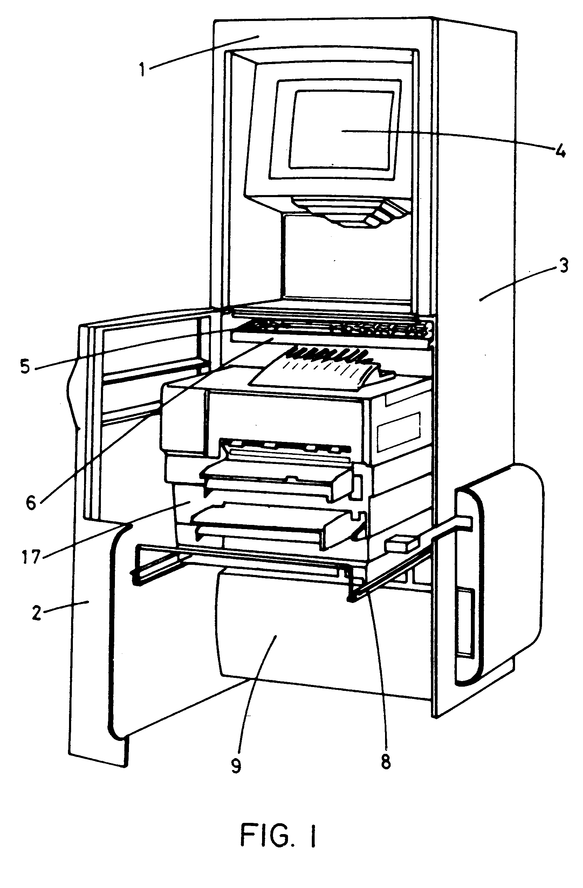

Referring to Figure 1, the reference numeral 1 designates the cabinet as a whole which encloses the various electronic elements together with the electrical safety elements of the system which is the subject of the invention. The cabinet has two service doors (2, 3), one medium-height front door of synthetic material provided for access to the printer, and another full-height metal back door (3) (for access to the whole of the interior). Both doors have closure tracks. A touch-sensitive screen (4) is incorporated in the upper part of the cabinet (1). This screen (4) is, in the embodiment depicted, a 14-inch VGA touch-sensitive screen constituting the element for interaction with the user, since it makes it possible to select thereon simply by touching with the finger, the desired option among all those offered by the instantaneous information system.

The system is furnished with intelligence by a microcomputer (not represented) which is inaccessible from outside. This microcomputer is, in the embodiment depicted, a tower-type PC 386-DX microcomputer (XEROX 386), which may or may not include specific communications cards.

Situated at medium height, and already accessible through the front door (2), there is a service keyboard (5) which is inaccessible by the user. This keyboard (5) is a conventional keyboard and can be extracted from the cabinet (1) via a roller slide (6). Immediately below this service keyboard (5) is arranged a printer (17) which is what provides the user with the documentation via an exit slot (7) made in the front door (2). This printer is, in the embodiment shown, an 11 pages/min. (XEROX 4030) laser printer with two paper trays. Like the service keyboard (5), the said printer can be extracted via an exit slide (8).

The cabinet (1) incorporates, moreover, in its upper part, two 220 V/10 W fans (not depicted) which, via slots in the cabinet, create a forced ventilation.

Likewise, the cabinet (1) includes a distribution panel which contains a general 40 A differential (0.03 A leakage dropout current), a magnetothermal (excess consumption) for the 10 A equipment and another for the 2 A fans, a contactor relay with latching circuit and regulated thermostat with 41 internal degrees and five standard electrical connection sockets.

Finally, in the lower part of the cabinet (1) is arranged a perforated plate (9).

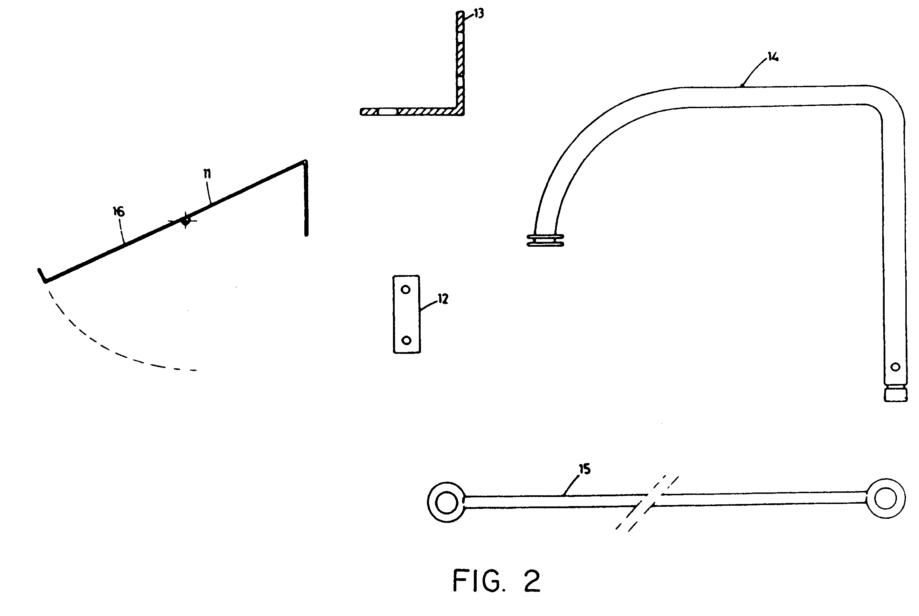

With reference to Figure 2 of the accompanying drawings, this depicts the paper output tray (10) of the instantaneous information system which is the subject of this invention. The tray (10) is a stainless steel component whose function is to guide the documents from when they leave the printer until they emerge outside so that the user can remove them.

The tray (10) consists of a component (11) which is anchored to the front door (2) just below the forward part of the slot (7) for document exit. This component (11) has a movable part (16). The component (12) of the tray (10) is welded to the chassis and is one of the pins for rotation of the component (15). For its part, the component (13) is anchored to the front door (2) and is the support on which the component (14) pivots. This component (14) pivots on the component (3) and moves by virtue of the component (15) and its movement is what raises or lowers the movable part of the component (11). For its part, the component (15), on being anchored to the chassis (via the component (12)) far from the pin for rotation of the hinges of the front door (2) causes, when the said door is opened or closed, a radial displacement separate from that of the door and which is utilized in order to pull or push the component (14) which, in its turn, raises or lowers the movable part of the tray (component 11).

The fact that the tray is depressed automatically on opening the front door (2) serves not to hinder the course described by the printer as it runs along its guides (8).

The general operation of the instantaneous information system which is the subject of this patent application is as follows:

The system depicts its function on a moving screen, usually in several languages. After touching the screen a selection menu will appear with copious graphical support which will enable the user to select the desired path. Alphanumeric data can be entered via an on-screen simulated keyboard. After checking the consistency of the request (with access to the database if necessary), the desired document will be printed and may incorporate data obtained from the remote database.

The instantaneous information system which is the subject of the present patent application has various fields of application, such as, for example:
a) Conventional information point. Tourist routes, information on civic services, company information.
b) Printed form self-service point. Obtaining printed forms for subsequent filling in and delivery. (Administration, service companies, banking, insurance, etc.).
c) Procedural self-service point. Enables the user to initiate a negotiation which will provide as output a provisional or final document.

It must be understood that the foregoing constitutes the description of a preferred embodiment of the instantaneous information system which is the subject of this patent application, it being understood that within the aforesaid system may be incorporated a series of changes and modifications which must be regarded as included within the scope of the present invention, whilst not altering the essence thereof, and that it remains properly within the attached claims.

## Claims

1. Instantaneous information system characterized in that it includes a touch-sensitive screen (4) acting as user-interactive element, on which is displayed a selection menu with graphical support and which possesses a simulated keyboard through which alphanumeric data are entered; a microcomputer which is inaccessible from outside and which endows the system with intelligence, with the possibility of including specific communications cards; a service keyboard (5) which is inaccessible to the user; a laser type printer which provides the documentation via an exit slot (7); and a cabinet (1) which encloses all the above elements and which includes, moreover, in its upper part, two fans which create a forced ventilation, there being provided a distribution panel with a general differential, a magnetothermal device both for the equipment and for the fans, a contactor relay with latching circuit and thermostat and five electrical connection sockets.

2. System according to Claim 1, characterized in that it is not connected to any ather equipment, providing information in the form of a printed document already stored therein.

3. System according to Claim 1, characterized in that it constitutes elements of a local network of other instantaneous information systems according to Claim 1, one of them holding the database for all the elements of the network.

4. System according to Claim 1, characterized in that it is connected to a central computer by way of remote processing, with which it carries out transactions to obtain and/or check and/or modify the desired information.

## Amended claims

### Amended claims under Art. 19.1 PCT

1. Instantaneous information system which includes a touch-sensitive screen (4) acting as user-interactive element, on which is dysplayed a selection menu with graphical support and which possesses a simulated keyboard through which alphanumeric data are entered; a microcomputer which is inaccessible from outside and which endows the system with intelligence, with the possibility of including specific communications cards; and a laser type printer which provides the documentation via an exit slot (7); characterized in that it furthermore comprises a service keyboard (5) which is inaccessible to the user; and a cabinet (1) which encloses all the above elements and which includes, moreover, in its upper part, two fans which create a forced ventilation, there being provided a distribution panel with a general differential, a magnetothermal device both for the equipment and for the fans, a contactor relay with latching circuit and thermostat and five electrical connection sockets.

2. System according to Claim 1, characterized in that it is not connected to any ather quipment, providing information in the form of a printed document already stored therein.

3. System according to Claim 1, characterized in that it constitutes elements of a local network of other instantaneous information systems according to Claim 1, one of them holding the database for all the elements of the network.

4. System according to Claim 1, characterized in that it is connected to a central computer by way of remote processing, with which it carries out transactions to obtain and/or check and/or modify the desired information.

Statement under Art. 19.1 PCT
The applicant admits that Patent EP 0 455 244 includes, the same as this application, a tactile screen and a computer: this Patent also includes a user's keyboard, but a simulated keyboard on the screen itself is not involved, as in the present application, but a normal computer keyboard.

Similarly, the Utility Model DE 87 11 758 includes a printer installed in a similar manner to the printer of this appliction.

Lastly, Patent EP 0 422 577 includes, the same as this application, a computer, a tactile screen and a simulated keyboard assembled on the screen.

Accordingly, to take into account the anticipation of the mentioned elements of the present application, i.e.,:
- Tactile screen 4,
- Simulated keyboard assembled in said screen,
- Computer,
- Printer,
 these elements have been taken out of the characterising clause of Claim 1 and placed in front of the term "characterized", thus only those elements, representing the specific contribution of the invention to the type of system claimed, being left taken up in the characterizing clause of Claim 1.

The remaining references cited in the Interantional Search Report are not commented upon, inasmuch as they have not been considered as particularly pertinent in that Report.
